# EUROPEAN PATENT APPLICATION

(11) **EP 3 444 129 A1**
(43) Date of publication of application: **20.02.2019**
(21) Application number: 18188282.0
(22) Date of filing: 09.08.2018
(51) Int. Cl.: B60C 11/04, B60C 11/13, B60C 11/12

(54) **PNEUMATIC TIRE**

(30) Priority: 17.08.2017 US 201715679242
(71) Applicant: The Goodyear Tire & Rubber Company, Akron, OH 44316 (US)
(72) Inventor: MULLER, Philippe Joseph Auguste, B-6971 Champlon (BE); CHO, Jung Wan, Hudson, OH 44236 (US); PENIN, Sebastien, L-9135 Schieren (LU); VILLAMIZAR, William Urbano, L-7521 Mersch (LU); TUCCELLA, Franck, F-54720 Lexy (FR)
(74) Representative: Kutsch, Bernd

(57) **Abstract**

A pneumatic tire (1) is disclosed comprising a first, second, third and fourth circumferential groove (10, 20, 30, 40) each extending in a circumferential direction of the pneumatic tire (1). The first, second, third, and fourth circumferential grooves define first, second, third, fourth, and fifth ribs (110, 120, 130, 140, 150), each of these ribs (110, 120, 130, 140, 150) including respective laterally extending grooves (114, 124, 134, 144, 154) and respective laterally extending sipes (116, 126, 136, 146, 156). The lateral grooves (114) of the first rib (110) each having chamfers (118) on a first or upper side at an intersection of the respective lateral grooves (114) with the first circumferential groove (10).

## Description

### Field of Invention

The present invention relates to a pneumatic tire, preferably an all-season pneumatic tire, with an improved tread with respect to improved stiffness and more uniform footprint pressure distribution. The tire also shows improved grip on snow and improved braking.

### Background of the Invention and Definitions

Conventionally, in addition to circumferential main grooves and lateral grooves, pneumatic tire treads may have sipes on a tread surface in order to demonstrate favorable functional characteristics (e.g., low rolling resistance, good traction, good durability, etc.). A tire with tread blocks with chamfers and sipes is known for instance from US-B-6,983,777.

### Definitions

The following definitions are controlling for the disclosed invention.

"Axial" and "Axially" means the lines or directions that are parallel to the axis of rotation of the tire.

"Axially Inward" means in an axial direction toward the equatorial plane. "Axially Outward" means in an axial direction away from the equatorial plane.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Equatorial Plane" means the plane perpendicular to the tire's axis of rotation and passing through the center of its tread; or the plane containing the circumferential centerline of the tread.

"Groove" means an elongated void area in a tread that may extend circumferentially or laterally in the tread in a straight, curved or zigzag manner. It is understood that all groove widths are measured perpendicular to the centerline of the groove. Grooves have a width wider than the width of sipes and preferably in a range of from 2 mm to 20 mm.

"Lateral" means a direction going from one sidewall of the tire towards the other sidewall of the tire.

"Radial" and "radially" mean directions radially toward or away from the axis of rotation of the tire.

"Sipe" means a narrow groove having a width in the range of from 0.2% to 0.8% of the tread width or a width of less than 2 mm. Sipes are typically formed by steel blades having a 0.4 to 1.6 mm, inserted into a cast or machined mold.

"Tread" means the ground contacting portion of a tire.

### Summary of the Invention

The invention relates to a tire in accordance with claim 1.

Dependent claims refer to preferred embodiments of the invention.

A pneumatic tire in accordance with a preferred aspect of the present invention includes a first circumferential groove extending in a circumferential direction of the pneumatic tire, a second circumferential groove extending in the circumferential direction of the pneumatic tire, a third circumferential groove extending in the circumferential direction of the pneumatic tire; and a fourth circumferential groove extending in the circumferential direction of the pneumatic tire, the first, second, third, and fourth circumferential grooves defining first, second, third, fourth, and fifth ribs. Each of the ribs includes lateral grooves and lateral sipes. The lateral grooves of the first rib each having chamfers on an upper side at an intersection with the first circumferential groove.

According to another aspect of the present invention, the lateral grooves of the second rib each have chamfers on a lower side at an intersection with the first circumferential groove, the lower side of the second rib being circumferentially opposite the upper side of the first rib.

According to another aspect of the present invention, the lateral grooves of the second rib each have chamfers on an upper side at an intersection with the second circumferential groove, the upper side of the second rib being circumferentially opposite the lower side of the second rib.

According to another aspect of the present invention, the lateral grooves of the third rib each have chamfers on an upper side at an intersection with the second circumferential groove, the upper side of the third rib being circumferentially equivalent to the upper side of the second rib.

According to another aspect of the present invention, the lateral grooves of the third rib each have chamfers on a lower side at an intersection with the third circumferential groove, the lower side of the third rib being circumferentially opposite the upper side of the third rib.

According to another aspect of the present invention, the lateral grooves of the fourth rib each have chamfers on a lower side at an intersection with the third circumferential groove, the lower side of the fourth rib being circumferentially equivalent the lower side of the third rib.

According to another aspect of the present invention, the lateral grooves of the fourth rib each have chamfers on an upper side at an intersection with the fourth circumferential groove, the upper side of the fourth rib being circumferentially opposite the lower side of the fourth rib.

According to another aspect of the present invention, the lateral grooves of the fifth rib each have chamfers on a lower side at an intersection with the fourth circumferential groove, the lower side of the fifth rib being circumferentially opposite the upper side of the fourth rib.

A tread for a pneumatic tire in accordance with a preferred aspect of the present invention includes a first circumferential groove extending in a circumferential direction of the pneumatic tire, a second circumferential groove extending in the circumferential direction of the pneumatic tire, a third circumferential groove extending in the circumferential direction of the pneumatic tire, and a fourth circumferential groove extending in the circumferential direction of the pneumatic tire. The first, second, third, and fourth circumferential grooves define first, second, third, fourth, and fifth ribs. Each of the ribs includes lateral grooves and lateral sipes extending across each rib. The lateral grooves of the first rib each have chamfers on an upper side at an intersection with the first circumferential groove. The lateral sipes of the third rib each have crimped portions both where the sipes intersect the second groove and where the sipes intersect the third groove.

Preferably, each of the lateral sipes of both the first and fifth ribs are blind sipes.

### Brief Description of the Drawings

The present invention will be more clearly understood by the following description of some examples thereof, with reference to the accompanying drawings, in which:

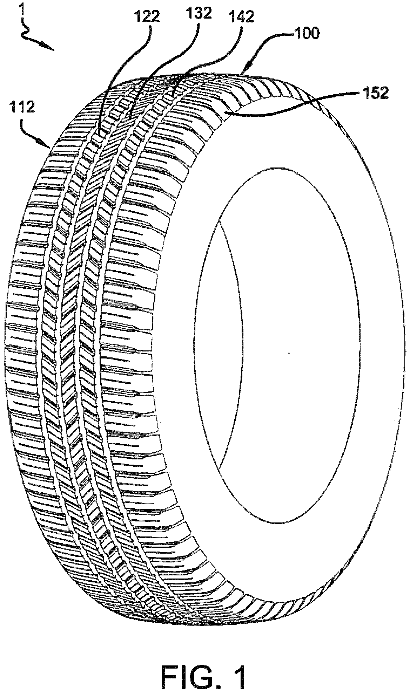

FIG. 1 is a schematic perspective view of a pneumatic tire having a tread pattern in accordance with the present invention.
FIG. 2 is a schematic orthogonal front view of the pneumatic tire and tread pattern of FIG. 1.

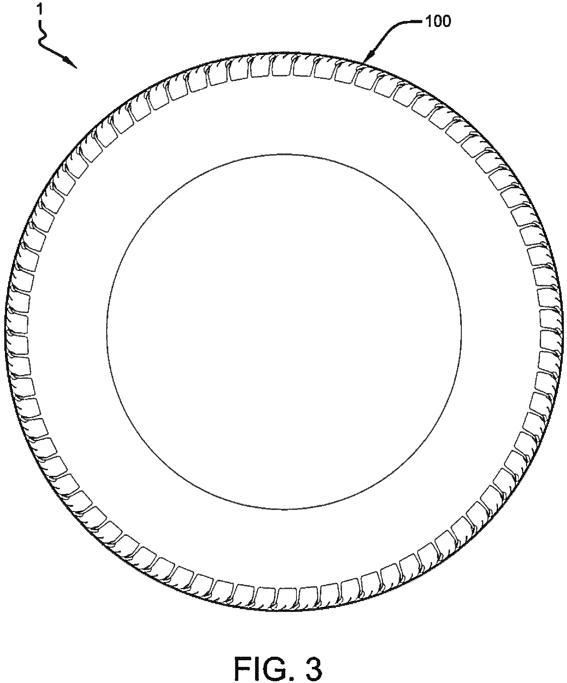

FIG. 3 is a schematic orthogonal side view of the pneumatic tire and tread pattern of FIG. 1.
FIG. 4 is a schematic orthogonal detail view of the tread pattern of FIG. 1.
FIG. 5 is a magnified schematic orthogonal detail view of the detail of FIG. 4.

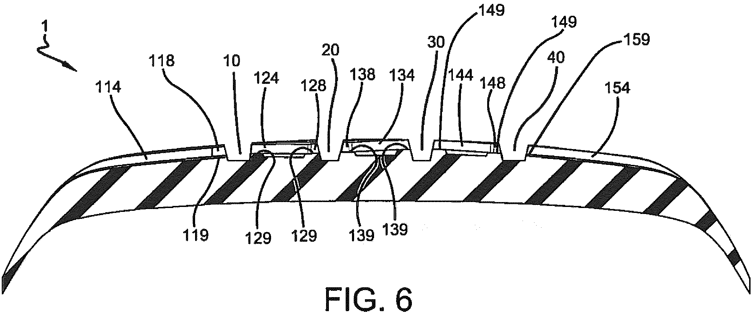

FIG. 6 is a schematic sectional view taken along line 6-6 in FIG. 5.

### Description of Example Embodiments of the Present Invention

A pneumatic tire 1 in accordance with the present invention includes a tread 100 with a first main circumferential groove 10, a second main circumferential groove 20, a third main circumferential groove 30, and a fourth main circumferential groove 40 all extending in a circumferential direction C of the pneumatic tire forming the tread 100. Five land portions, or ribs 110, 120, 130, 140, 150 are formed by these main circumferential grooves 10, 20, 30, 40. Each of the ribs 110, 120, 130, 140, 150 has additional grooves and sipes extending laterally and/or circumferentially across the ribs 110, 120, 130, 140, 150 forming discreet and circumferentially repeating blocks, or tread elements 112, 122, 132, 142, 152. The main circumferential grooves 10, 20, 30, 40 preferably have, for example, a lateral width between 3.0 mm and 20.0 mm or 4 to 8 mm and an example radial depth between 5.0 mm and 13.0 mm.

The first shoulder rib 110 preferably has have alternating lateral grooves 114 and lateral blind sipes 116 extending axially and at a slight angle from the main circumferential groove 10 axially toward the outer edge of the tread 100.

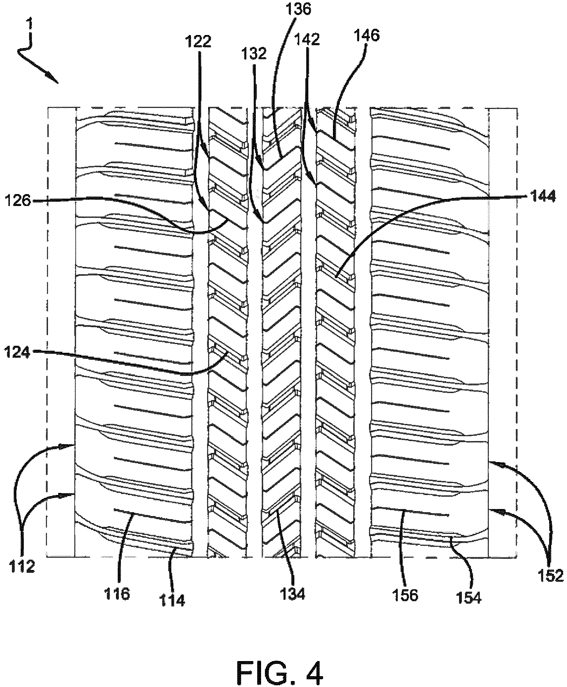

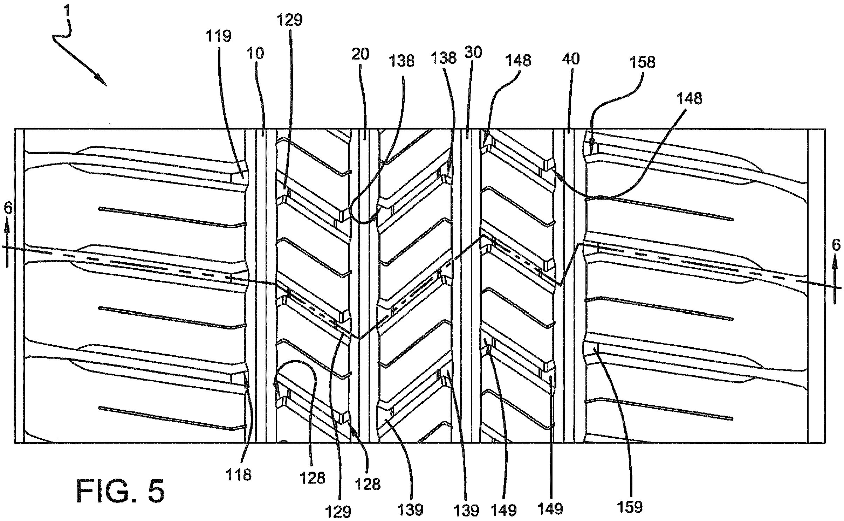

The lateral grooves 114 have chamfers 118 on a first or upper side (as viewed in Fig. 4 or Fig. 5 with the top of the respective page being the upper side) at their intersection with the first main circumferential groove 10.

In a preferred aspect, the first side or upper side is the leading edge side or the side first coming in contact with the road when the tire is mounted to a vehicle in accordance with its specification.

The bottom of the lateral grooves 114 preferably has humps or preferably approximately 2.0 mm steps 119 at each chamfer 118.

The second shoulder rib 150 has alternating lateral grooves 154 and lateral blind sipes 156 extending axially and at a slight angle from the main circumferential groove 40 axially toward the outer edge of the tread 100.

The lateral grooves 154 have chamfers 158 on second or lower side (as viewed in Fig. 4 or Fig. 5) at their intersection with the fourth main circumferential groove 40.

The bottom of the lateral grooves 154 preferably have humps or preferably approximately 2.0 mm steps 159 at each chamfer 158.

The lateral grooves 114, 124, 134, 144, 154 preferably each have a circumferential width in a range of from 2 to 4 mm.

The three center main circumferential ribs 120, 130, 140 preferably have alternating angled grooves 124, 134, 144 and angled sipes 126, 136, 146 extending axially and circumferentially across the ribs 120, 130, 140 between the corresponding main circumferential grooves 10, 20, 30, 40.

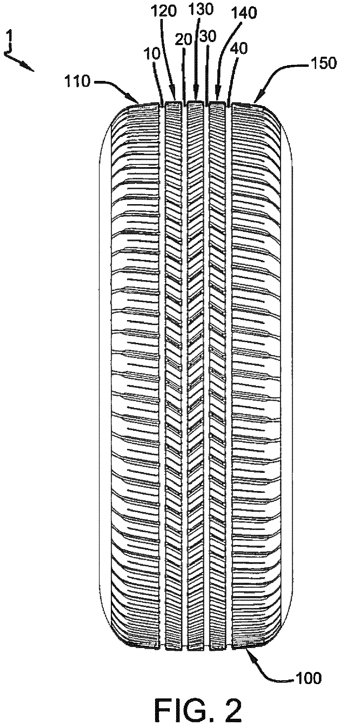

As shown in FIGS. 2 and 4, the grooves 124, 144 and sipes 126, 146 of the outer ribs 120, 140 preferably extend at equal angles while the grooves 134 and sipes 136 of the center rib 130 preferably extend at an equal, but opposite, angle compared to the angle of the ribs 120, 140.

The angled grooves 124 of the first intermediate rib 120 preferably have chamfers on a lower side (as viewed in Fig. 4 or Fig. 5) at their intersection with the first main circumferential groove 10. The angled grooves 124 of the first intermediate rib 120 preferably further have chamfers 128 on an upper side (as viewed in Fig. 4 or Fig. 5) at their intersection with the second main circumferential groove 20. The bottom of the lateral grooves 124 preferably have humps or preferably approximately 2.0 mm steps 129 at each chamfer 128.

The angled grooves 134 of the center rib 130 have chamfers on an upper side (as viewed in Fig. 4 or Fig. 5) at their intersection with the second main circumferential groove 20. The angled grooves 134 of the center rib 130 preferably further have chamfers 138 on a lower side (as viewed in Fig. 4 or Fig. 5) at their intersection with the third main circumferential groove 30. The bottom of the lateral grooves 134 preferably have humps or preferably approximately 2.0 mm steps 139 at each chamfer 138.

The angled grooves 144 of the second intermediate rib 140 have chamfers on a lower side (as viewed in Fig. 4 or Fig. 5) at their intersection with the third main circumferential groove 30. The angled grooves 144 of the second intermediate rib 140 preferably further have chamfers 148 on an upper side (as viewed in Fig. 4 or Fig. 5) at their intersection with the fourth main circumferential groove 40. The bottom of the lateral grooves 144 preferably have humps or preferably approximately 2.0 mm steps 149 at each chamfer 148.

Each of the angled sipes 126, 136, 146 of the center rib 130 and the intermediate ribs 120, 140 and the shoulder sipes 116, 156 of the shoulder ribs 110, 150 preferably have angled crimps at each end adjacent one of the main circumferential grooves 10, 20, 30, 40.

Along the first main circumferential groove 10, the shoulder sipes 116 are preferably crimped upward (as viewed in Fig. 4) and the angled sipes 126 are preferably crimped downward (as viewed in Fig. 4).

Along the second main circumferential groove 20, the angled sipes 126 are preferably crimped upward (as viewed in Fig. 4) and the angled sipes 136 are preferably crimped downward (as viewed in Fig. 4).

Along the third main circumferential groove 30, the angled sipes 136 are preferably crimped downward (as viewed in Fig. 4) and the angled sipes 146 are preferably crimped downward (as viewed in Fig. 4).

Along the fourth main circumferential groove 40, the angled sipes 146 are preferably crimped upward (as viewed in Fig. 4) and the shoulder sipes 156 are preferably crimped downward (as viewed in Fig. 4).

The tread design as described and in particular with the chamfers 118, 128, 138, 148, 158 and preferably also the steps 119, 129, 139, 149, 159 provides a tread 100 with improved stiffness and a more uniform footprint pressure distribution.

## Claims

1. A pneumatic tire comprising a first, second, third and fourth circumferential groove (10, 20, 30, 40) each extending in a circumferential direction of the pneumatic tire (1), the first, second, third, and fourth circumferential grooves defining first, second, third, fourth, and fifth ribs (110, 120, 130, 140, 150), each of these ribs (110, 120, 130, 140, 150) including respective laterally extending grooves (114, 124, 134, 144, 154) and respective laterally extending sipes (116, 126, 136, 146, 156), the lateral grooves (114) of the first rib (110) each having chamfers (118) on a first or upper side at an intersection of the respective lateral grooves (114) with the first circumferential groove (10).

2. The pneumatic tire as set forth in claim 1 wherein the respective lateral grooves (124) of the second rib (120) each have chamfers (128) on a second or lower side of the respective lateral grooves (124) at an intersection of the respective lateral grooves (124) with the first circumferential groove (10), the second or lower side of the respective lateral grooves (124) of the second rib (120) being circumferentially opposite the first or upper side of the respective lateral grooves (114) of the first rib (110).

3. The pneumatic tire as set forth in claim 2 wherein the respective lateral grooves (124) of the second rib (120) each have chamfers (128) on a first or upper side of the respective lateral grooves (124) at an intersection of the respective lateral grooves (124) with the second circumferential groove (20), the first or upper side of the respective lateral grooves (124) of the second rib (120) being circumferentially opposite the second or lower side of the respective lateral grooves (114) of the first rib (110).

4. The pneumatic tire as set forth in at least one of the previous claims wherein the respective lateral grooves (134) of the third rib (130) each have chamfers (138) on a first or upper side of the respective lateral grooves (134) at an intersection of the respective lateral grooves (134) with the second circumferential groove (20), the first or upper side of the respective lateral grooves (124) of the third rib (130) being circumferentially equivalent to the first or upper side of the respective lateral grooves (124) of the second rib (120).

5. The pneumatic tire as set forth in claim 4 wherein the respective lateral grooves (134) of the third rib (130) each have chamfers (138) on a second or lower side of the respective lateral grooves (134) at an intersection of the respective lateral grooves (134) with the third circumferential groove (30), the second or lower side of the respective lateral grooves (134) of the third rib (130) being circumferentially opposite the first or upper side of the respective lateral grooves (134) of the third rib (130).

6. The pneumatic tire as set forth in at least one of the previous claims wherein the respective lateral grooves (144) of the fourth rib (140) each have chamfers (148) on a second or lower side of the respective lateral grooves (144) at an intersection of the respective lateral grooves (144) with the third circumferential groove (30), the second or lower side of the respective lateral grooves (144) of the fourth rib (140) being circumferentially equivalent to the second or lower side of the respective lateral grooves (144) of the third rib (130).

7. The pneumatic tire as set forth in claim 6 wherein the respective lateral grooves (144) of the fourth rib (140) each have chamfers (148) on a first or upper side of the respective lateral grooves (144) at an intersection of the respective lateral grooves (144) with the fourth circumferential groove (40), the first or upper side of the respective lateral grooves (134) of the fourth rib (140) being circumferentially opposite the second or lower side of the respective lateral grooves (144) of the fourth rib (140).

8. The pneumatic tire as set forth in claim 7 wherein the respective lateral grooves (154) of the fifth rib (150) each have chamfers on a second or lower side at of the respective laterals grooves (154) an intersection of the respective lateral grooves (154) with the fourth circumferential groove (40), the second or lower side of the respective laterals grooves (154) of the fifth rib (150) being circumferentially opposite the first or upper side of the fourth rib (140).

9. The pneumatic tire of at least one of the previous claims wherein the respective laterals grooves (114, 124, 134, 144, 154) of each of the first, second, third, fourth, and fifth ribs (110, 120, 130, 140, 150) extend across the respective rib (110, 120, 130, 140, 150).

10. The pneumatic tire of at least one of the previous claims wherein the respective laterals grooves (114, 124, 134, 144, 154) of each of the first, second, third, fourth, and fifth ribs (110, 120, 130, 140, 150) extend across the respective rib (110, 120, 130, 140, 150) from one circumferential groove (10, 20, 30, 40) to another circumferential groove (10, 20, 30, 40) or from a tire shoulder area to a circumferential groove (10, 40) respectively.

11. The pneumatic tire of at least one of the previous claims wherein the respective lateral sipes (116, 126, 136, 146, 156) of each of the first, second, third, fourth, and fifth ribs (110, 120, 130, 140, 150) extend across the respective rib (110, 120, 130, 140, 150).

12. The pneumatic tire of at least one of the previous claims wherein the respective lateral sipes (116, 126, 136, 146, 156) extend across the respective rib (110, 120, 130, 140, 150) from one adjacent circumferential groove (10, 20, 30, 40) to another adjacent circumferential groove (10, 20, 30, 40) and from a respective tire shoulder area to a respective circumferential groove (10, 40).

13. The pneumatic tire of at least one of the previous claims 1 to 11 wherein the respective lateral sipes (116, 126, 136, 146, 156) extend across the respective rib (110, 120, 130, 140, 150) from one adjacent circumferential groove (10, 20, 30, 40) to another adjacent circumferential groove (10, 20, 30, 40) and from the first and fourth circumferential groove (10, 40) into the first or fifth rib (110, 150) respectively, but not fully across the first and fifth rib.

14. The pneumatic tire of at least one of the previous claims wherein:
(i) the respective lateral sipes (126) of the second rib (120) each having crimped portions both where the respective lateral; sipes (126) intersect the first and second circumferential groove (10, 20); and/or
(ii) the respective lateral sipes (136) of the third rib (130) each having crimped portions both where the respective lateral sipes (136) intersect the second and third circumferential groove (20, 30); and/or
(iii) the respective lateral sipes (146) of the fourth rib (140) each having crimped portions both where the respective lateral sipes (146) intersect the third and fourth circumferential groove (30, 40).

15. The pneumatic tire of at least one of the previous claims wherein each of the lateral sipes (116, 156) of both of the first and fifth rib (110, 150) are blind sipes.
